# EUROPEAN PATENT SPECIFICATION

(11) **EP 2 559 540 B1**
(45) Date of publication and mention of the grant of the patent: **25.03.2020**
(21) Application number: 11768780.6
(22) Date of filing: 07.04.2011
(51) Int. Cl.: B29C 43/24, B29C 43/46, B29C 43/52, B29C 43/58, B29C 33/06, B29C 43/14, B29C 48/08, B29C 48/91, B29C 48/88, B29L 7/00, B29K 105/00

(54) **INDUCTION HEATING ROLL DEVICE**
WALZVORRICHTUNG MIT INDUKTIONSERWÄRMUNG
DISPOSITIF À CYLINDRE DE CHAUFFAGE À INDUCTION

(30) Priority: 13.04.2010 JP 2010092501
(43) Date of publication of application: 20.02.2013
(73) Proprietor: IHI Corporation, Tokyo 135-8710 (JP); IHI Logistics & Machinery Corporation, Koto-ku Tokyo 135-0061 (JP)
(72) Inventor: IMAIZUMI, Hiroaki, Tokyo 135-8710 (JP); MAEDA, Hirotomo, Tokyo 1080075 (JP)
(74) Representative: Grünecker Patent- und Rechtsanwälte PartG mbB
(86) International application number: PCT/JP2011/058792
(87) International publication number: WO 2011/129259

(56) References cited:
- EP-A1- 0 051 847
- EP-A2- 0 671 248
- EP-A2- 1 403 607
- JP-A- 3 138 887
- JP-A- 7 243 783
- JP-A- 8 332 667
- JP-A- S6 011 715
- JP-A- 10 337 768
- JP-A- 54 055 619
- JP-A- 61 058 706
- JP-A- 2010 017 943
- JP-A- 2010 017 943
- US-A1- 2002 004 441
- US-A1- 2007 001 333

## Description

### Technical Field

The present invention relates to an induction heating roll device which performs induction heating with respect to a plastic resin material while rolling or kneading the resin material by pressurizing the resin material.

### Background Art

In order to form a resin film from a resin material such as plastic or rubber, rolling or kneading is performed.

In the rolling, the resin material is heated to about 200°C while being rolled. The rolling is performed as follows.

First, a heat medium is supplied between a pair of rolls, and therefore, the rolls are heated to about 200°C. In this state, the resin material is supplied between the pair of rolls, and the resin material is rolled between the pair of rolls. Moreover, since the resin material is stuck to the rolls, the rolled resin material is separated from the pair of rolls by a take-off roll.

In the kneading, the resin material is heated to about 200°C while being kneaded. The kneading is performed as follows.

First, similar to the rolling, since the heating medium is supplied to the pair of rolls, the rolls are heated to about 200°C. In this state, the resin material is supplied between the pair of rolls, and the resin material is pressurized and kneaded between the pair of rolls. Moreover, the resin material is rotated along with the pair of rolls while being stuck to the rolls, and the resin material is repeatedly pressurized and kneaded between the pair of rolls.

### Citation List

### Patent Literatures

PTL 1: Japanese Patent Application Laid-Open No. 2010-7142
PTL 2: Japanese Patent No. 2781836
PTL 3: Japanese Patent No. 3968879 JP 2010 017943 A relates to a calender roll with a centrally integrated induction heating coil and circumferentially placed fluid cooling channels. EP 1 403 607 A2 relates to a thermal processing roller. EP 0 671 248 A2 relates to a roll for processing flat products.

### Summary of Invention

### Technical Problem

In the above-described rolling or kneading, the heating medium (oil or the like) for heating the rolls is heated by a temperature controller which is separately provided to the rolls. The temperature of the rolls is increased up to a set temperature (for example, 200°C) by the heating medium which is heated in this way.

Moreover, when the temperature of the rolls is higher than a set upper limit temperature (for example, 250°C) after the temperature of the rolls is increased up to the set temperature, the heating medium is cooled by a cooling function of the temperature controller, and the temperature of the rolls is able to be decreased.

However, in the heating by the temperature controller, time is required in order to increase the temperature of the rolls. For example, in the heating by the temperature controller, the temperature of the rolls is able to be increased by a rate of temperature rise of only about 40 °C/hr.

Therefore, an object of the present invention is to provide a device capable of increasing the temperature of the rolls up to the set temperature in a short time and suppressing the temperature of the rolls to less than or equal to the upper limit temperature after increasing the temperature of the rolls up to the set temperature.

### Solution to Problem

In order to achieve the object, according to the present invention, there is provided an induction heating roll device according to claim 1.

According to the present invention, the cooling medium supply device supplies a mist-like cooling medium to the cooling medium flow channel.

In addition, according to a preferred embodiment of the present invention, the above-described induction heating roll device further includes: a temperature sensor which detects a temperature of the roll; and
a control device which controls the cooling medium supply device based on the detected temperature so that the temperature of the roll is less than or equal to a set upper limit temperature.

### Advantageous Effect of the Invention

According to the above-described present invention, since the induction heating coil provided inside of the roll performs induction heating of the roll, the temperature of the roll is able to be increased up to the set temperature in a short time.

On the other hand, the resin material is heated by being pressurized. As a result, the temperature of the roll tends to exceed the upper limit temperature after the temperature of the roll is increased up to the set temperature. Therefore, in the present invention, since the cooling medium is supplied to the cooling medium flow channel formed inside of the roll by the cooling medium supply device, the temperature of the roll is able to be suppressed so as to be less than or equal to the upper limit temperature.

### Brief Description of Drawings

Fig. 1 illustrates a calender to which an induction heating roll device according to the present invention is able to be applied.
Fig. 2 is a cross-sectional view when viewed from an arrow II-II of Fig. 1.
Fig. 3A is a view when viewed from an arrow IIIA-IIIA of Fig. 2,
Fig 3B is a view when viewed from an arrow B-B of Fig. 3A.
Fig. 4 is a configuration diagram of the induction heating roll device which is applied to rolling rolls.
Fig. 5 is a cross-sectional view when viewed from an arrow V-V of Fig. 4.
Fig. 6 shows a modification of the calender.
Fig. 7 is a view when viewed from an arrow VII-VII of Fig. 6.

### Description of Embodiments

A preferred embodiment of the present invention will be described with reference to the drawings. Moreover, in the drawings, the common portions are denoted by the same reference numerals, and overlapping descriptions are omitted.

First, the calender 10 to which an induction heating roll device 20 according to the present embodiment is able to be applied is described, and thereafter, the induction heating roll device 20 will be described.

The induction heating roll device 20 is able to be applied to each of rolling rolls 5a and 5b of a first roll unit 5 and each of rolling rolls 7a, 7b, and 7c of a second roll unit 7 described below.

The rolling rolls 5a and 5b and the rolling rolls 7a, 7b, and 7c are a resin processing body.

### [Calender]

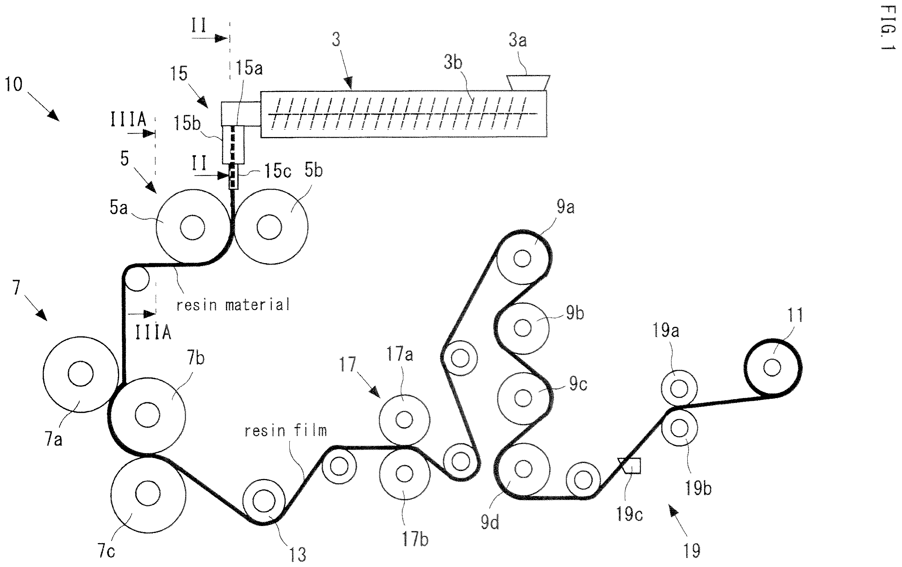

Fig. 1 is a configuration diagram of the calender 10 to which the induction heating roll device 20 of the present invention is able to be applied. The calender 10 is a device which molds a resin film from a resin material such as plastic or rubber. The calender 10 includes an extrusion unit 3, the first roll unit 5, the second roll unit 7, a plurality of cooling rolls 9a, 9b, 9c, and 9d, and a winding roll 11.

A molten resin material is supplied to the extrusion unit 3 (continuous kneader). The extrusion unit 3 kneads the resin material and supplies the kneaded resin material to the first roll unit 5 (between rolling rolls 5a and 5b in the example of Fig. 1). The extrusion unit 3 includes a material supply port 3a to which the resin material is supplied. The extrusion unit 3 kneads and mixes the resin material supplied from the material supply port 3a while transferring the resin material from the rear side to the front side.

The extrusion unit 3 may knead and mix the resin material while transferring the resin material from the rear side to the front side by a screw 3b which is provided in the inner space of the extrusion unit. In this case, the screw 3b in which a shaft extends from the rear side to the front side is rotated around an axis of the screw, and therefore, the resin material passes between spiral grooves which form the spiral screw 3b and is transferred from the rear side to the front side.

The first roll unit 5 rolls the resin material which is extruded from the extrusion unit 3. In this example, the first roll unit 5 includes the rolling rolls 5a and 5b which are driven to rotate around axes of the rolling rolls. The resin material is supplied between the rolling rolls 5a and 5b from the extrusion unit 3, and thereby, the resin material is pressurized and rolled between the rolling rolls 5a and 5b.

The second roll unit 7 rolls the resin material passing through the first roll unit 5. In this example, the second roll unit 7 includes the rolling rolls 7a, 7b, and 7c which are driven to rotate around axes of the rolling rolls. The resin material is transferred to between the rolling rolls 7a and 7b from the first roll unit 5. The resin material is pressurized and rolled between the rolling rolls 7a and 7b, and subsequently, is pressurized and rolled between the rolling rolls 7b and 7c. The resin material passing through the second roll unit 7 is formed in a film shape by the rolling of the first and second roll units 5 and 7. In the present invention, the resin material having a film shape is referred to as a resin film.

A take-off roll 13 is able to rotate around an axis of the take-off roll and separates the resin film from the second roll unit 7. In the example of Fig. 1, the take-off roll 13 separates the resin film from the rolling rolls 7c.

The plurality of cooling rolls 9a, 9b, 9c, and 9d is driven to rotate and is cooled by a cooling medium which flows inside of the cooling rolls. Each of the cooling rolls 9a, 9b, 9c, and 9d contact the resin film from the take-off roll 13, and therefore, the resin film is cooled. In Fig. 1, the plurality of cooling rolls 9a, 9b, 9c, and 9d is disposed in one row in the up and down directions.

The winding roll 11 is driven to rotate around an axis of the winding roll and winds the resin film from the plurality of cooling rolls 9a, 9b, 9c, and 9d.

The extrusion unit 3 is disposed on the upper step, the material supply port 3a of the extrusion unit 3 is positioned on the rear side (right side in Fig. 1) of the upper step, the first roll unit 5 is disposed on the front side (left side in Fig. 1) of the upper step, and the second roll unit 7 is disposed on the front side (left side in Fig. 1) of the lower step. According to this disposition, the resin material supplied to the material supply port 3a at the rear side of the upper step is kneaded by the extrusion unit 3 in the process of moving to the front side, subsequently, the resin material is rolled by the first roll unit 5 which is positioned at the front side of the upper step, thereafter, the resin material is rolled by the second roll unit 7 which is positioned at the front side of the lower step, to the resin film, and is transferred to the rear side.

In this way, since the resin material is formed the resin film during the process of being transferred from the rear side (right side in Fig. 1) to the front side (left side in Fig. 1) and moving to the rear side so as to U-turn, the entire length of the calender 10 is able to be decreased. For example, the entire length of the calender 10 may be about 2.5 m.

In addition, the take-off roll 13 is provided at the rear side (right side in Fig. 1) of the second roll unit 7, the plurality of cooling rolls 9a, 9b, 9c, and 9d is disposed from the upper step side to the lower step side in the rear side (right side in Fig. 1) of the take-off roll 13, and the winding roll 11 is provided at the rear side (right side in Fig. 1) of the plurality of cooling rolls 9a, 9b, 9c, and 9d. According to this disposition, the separating from the second roll unit 7 with respect to the resin film, the cooling thereof, and the winding thereof are able to be performed in the process in which the resin film molded from the resin material is returned from the front side to the rear side. Accordingly, even when the take-off roll 13, the cooling rolls 9a, 9b, 9c, and 9d, and the winding roll 11 are provided, the entire length of the calender 10 is able to be decreased.

The calender 10 may further include a molding portion 15, an embossing unit 17, and a trimming unit 19.

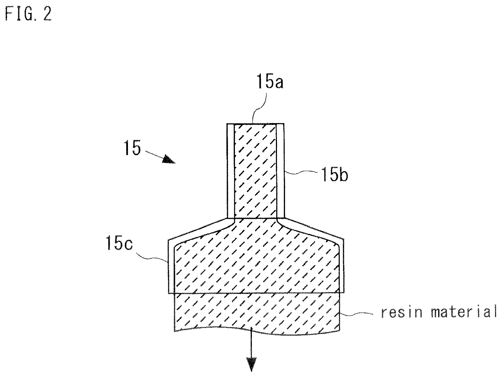

The molding portion 15 molds the resin material, which is extruded from the extrusion unit 3, in a plate shape. Fig. 2 is a cross-sectional view when viewed from an arrow II-II of Fig. 1. As illustrated in Figs. 1 and 2, the molding portion 15 includes a receiving port 15a which receives the resin material from the extrusion unit 3, a first portion 15b which extends downward from the receiving port 15a, and a second portion 15c which is connected to the lower end of the first portion 15b. The resin material from the receiving port 15a passes through internal spaces of the first portion 15b and the second portion 15c. The internal space of the second portion 15c is enlarged compared with the internal space of the first portion 15b in left and right directions of Fig. 2. However, the internal space of the second portion 15c is reduced from the internal space of the first portion 15b in a direction perpendicular to the paper surface of Fig. 2. Thereby, the resin material passing through inside the molding portion 15 is formed in a thin plate shape in the direction perpendicular to the paper surface of Fig. 2.

In Fig. 1, the embossing unit 17 includes a pair of embossing rolls 17a and 17b which are driven to rotate. A pattern having unevenness is formed on at least one outer circumferential surface of the embossing rolls 17a and 17b. Accordingly, the resin film passes between the pair of embossing rolls 17a and 17b, and the pattern of the embossing rolls 17a and 17b is imprinted to the resin film.

The trimming unit 19 includes a pair of pinch rolls 19a and 19b and a cutter 19c. By interposing the resin film between the pair of pinch rolls 19a and 19b, tension is applied to the resin film. In this state, the cutter 19c cuts into the resin film, ends in the width direction of the resin film are cut and dropped, and therefore, the width of the resin film is decreased.

In order to decrease the size of the calender 10, adopting of configuration 1 below is preferable.

### (Configuration 1)

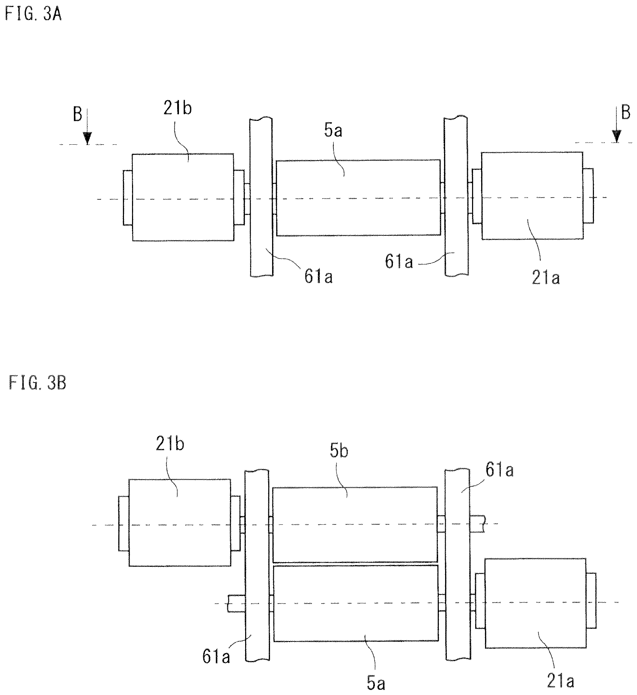

Fig. 3A is a view when viewed from an arrow IIIA-IIIA of Fig. 1. Fig 3B is a view when viewed from an arrow B-B of Fig. 3A. As illustrated in Fig. 3B, preferably, motors 21a and 21b are directly connected in the axial direction of the rolling rolls in each of the rolling rolls 5a and 5b. The motor 21a which is directly connected to the rolling roll 5a and the motor 21b which is directly connected to the rolling roll 5b are positioned on sides opposite to each other relative to the rolling rolls 5a and 5b in the axial directions of the rolling rolls 5a and 5b so as not to interfere with each other.

Thereby, since the rolling rolls 5a and 5b each are able to be driven to rotate even without using a universal joint, the width of the calender 10 (dimension in the direction perpendicular to the paper surface of Fig. 1) is able to be suppressed. Moreover, the rolling rolls 5a and 5b are supported so as to be rotated to a frame portion 61a.

Similarly, preferably, motors are directly connected in the axial direction of the rolling rolls in each of the rolling rolls 7a, 7b, and 7c. The motor which is directly connected to the rolling rolls 7a and 7c and the motor which is directly connected to the rolling roll 7b are positioned on sides opposite to each other relative to the rolling rolls 7a, 7b, and 7c in the axial directions of the rolling rolls 7a, 7b, and 7c.

### [Induction Heating Roll Device]

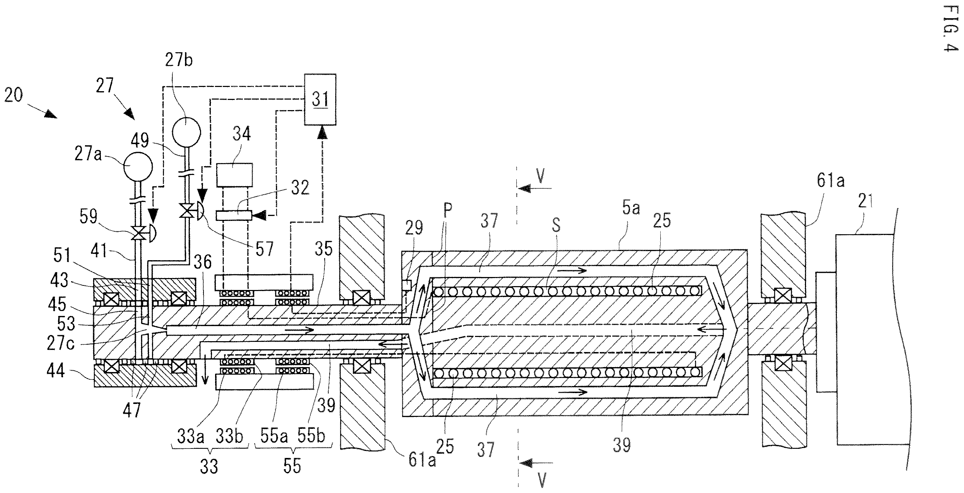

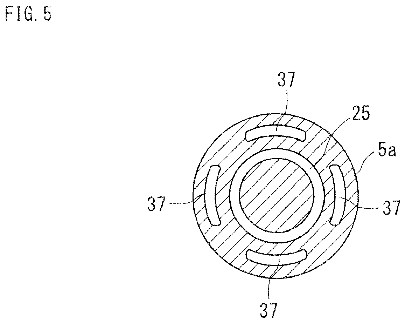

Fig. 4 illustrates a case where an induction heating roll device 20 according to the present embodiment is applied to the rolling roll 5a. Fig. 5 is a cross-sectional view when viewed from an arrow V-V of Fig. 4. Hereinafter, for the sake of simplicity, only the case of the rolling roll 5a is described. However, even in the cases of other rolling rolls 5b, 7a, 7b, and 7c, similarly, the induction heating roll device 20 may be applied.

The induction heating roll device 20 includes the rolling roll 5a, an induction heating coil 25, a cooling medium supply device 27, a temperature sensor 29, and a control device 31.

The induction heating coil 25 is provided inside of the rolling roll 5a. By applying alternating-current voltage to the induction heating coil 25, the induction heating coil performs induction heating of the rolling roll 5a. In the example of Fig. 4, the induction heating coil 25 is disposed so as to be wound around a center axis Ca of the rolling roll 5a. In order to supply a voltage to the induction heating 25, which is positioned on the rotating side, from the stationary side in a non-contact manner, as illustrated in Fig. 4, a rotary transformer 33 is provided. The rotary transformer 33 includes a stator coil 33a which is positioned on the stationary side and a rotor coil 33b which is positioned on the rotating side, and by operation of a magnetic field between the stator coil 33a and the rotor coil 33b, the alternating-current voltage is applied to the induction heating coil 25 from the a power supply 34 of the stationary side.

In addition, the rotor coil 33b is provided in a columnar extension portion 35 which is connected to the rolling roll 5a. In the example of Fig. 4, the extension portion 35 is positioned on a side opposite to the motor 21a, and the diameter of the extension portion is smaller than that of the rolling roll 5a.

Moreover, for example, the induction heating coil 25 may be disposed inside the rolling roll 5a as follows. The rolling roll 5a is divided in divided surfaces P of the end thereof. The induction heating coil 25 is disposed in the annular internal space S of the divided surfaces P. Thereafter, the divided surfaces P of the divided portions of the rolling roll are connected to each other by appropriate means.

Since the cooling medium supply device 27 supplies a mist-like cooling medium to a cooling medium flow channel 37 which is formed inside of the rolling roll 5a, the rolling roll 5a which is subjected to the induction heating by the induction heating coil 25 is cooled.

In the example of Fig. 4, the cooling medium supply device 27 includes an air source 27a, a cooling medium source 27b, and a nozzle portion 27c. The air source 27a supplies pressurized air (gas) to the nozzle portion 27c. The cooling medium source 27b supplies the cooling medium which is liquid (preferably, water) to the nozzle portion 27c. The nozzle portion 27c sprays the supplied cooling medium using the supplied pressurized air to the cooling medium flow channel 37 side (to a communication passage 36 in the example of Fig. 4), and therefore, the mist-like cooling medium is supplied to the cooling medium flow channel 37. In the example of Fig. 4, the nozzle portion 27c supplies the mist-like cooling medium to the cooling medium flow channel 37 through the communication passage 36 which is formed inside of the extension portion 35. Thereby, the mist-like cooling medium is supplied to the cooling medium flow channel 37. The mist-like cooling medium which is supplied to the cooling medium flow channel 37 passes through the cooling medium flow channel 37, and therefore, cools the rolling roll 5a. Thereafter, the cooling medium is discharged outside the rolling roll 5a through a discharge flow channel 39 which is formed inside of the rolling roll 5a and the extension portion 35. The discharge flow channel 39 communicates with a cooling medium flow channel 37.

In this example, as illustrated in Fig. 5, the shape of the cooling medium flow channel 37 when viewed from the axial direction of the rolling roll 5a is an arc shape, and the cooling medium flow channel is formed in four arc-shaped passages which have gaps therebetween in the circumferential direction. The arc shaped flow channels each extend in the axial direction of the rolling roll 5a. The mist-like cooling medium is supplied to each of the arc shaped passages from the communication passage 36, and the cooling medium flows to the discharge flow channel 39 after flowing to each of the arc shaped flow channels in the axial direction of the rolling roll 5a. In the example of Fig. 4, the discharge flow channel 39 is disposed further toward the center axis Ca side than the cooling medium flow channel 37 and extends in the axial direction of the rolling roll 5a.

The nozzle portion 27c is formed in a space inside of the columnar extension portion 35 which is connected to the rolling roll 5a. The pressurized air is supplied from the air source 27a to the nozzle portion 27c through an air supply tube 41, an air supply passage 43, and an air introduction passage 45. The air supply tube 41 extends from the air source 27a and supplies the pressurized air from the air source 27a to the air supply passage 43. The air supply passage 43 is formed inside of a stationary side member 44 which rotatably supports the extension portion 35 and supplies the supplied pressurized air to the air introduction passage 45. The air introduction passage 45 is formed in an annular shape when viewed from the axial direction of the rolling roll 5a inside of the extension portion 35 and is opened to the outer circumferential surface of the extension portion 35. Therefore, the air introduction passage 45 receives the pressurized air from the air supply passage 43. The air introduction passage 45 introduces the pressurized air which is received from the air supply passage 43 to the nozzle portion 27c.

In addition, in Fig. 4, a plurality of seal rings 47 which are annular when viewed from the axial direction is provided on the outer circumferential surface of the extension portion 35. Through the seal rings 47, the pressurized air is prevented from leaking from a communication portion of the air supply passage 43 and the air introduction passage 45 to the outside.

Similarly, the liquid cooling medium is supplied from the cooling medium source 27b to the nozzle portion 27c through a cooling medium supply tube 49, a cooling medium supply passage 51, and a cooling medium introduction passage 53. The cooling medium supply tube 49 extends from the cooling medium source 27b and supplies the cooling medium from the cooling medium source 27b to the cooling medium supply passage 51. The cooling medium supply passage 51 is formed inside of the stationary side member 44 and supplies the supplied cooling medium to the cooling medium introduction passage 53. The cooling medium introduction passage 53 is formed in an annular shape when viewed from the axial direction of the rolling roll 5a inside of the extension portion 35 and is opened to the outer circumferential surface of the extension portion 35. Therefore, the air introduction passage 53 receives the cooling medium from the cooling medium supply passage 51. The cooling medium introduction passage 53 introduces the cooling medium which is received from the cooling medium supply passage 51 to the nozzle portion 27c.

In addition, in Fig. 4, the seal rings 47 which are annular when viewed from the axial direction of the rolling roll 5a are provided on the outer circumferential surface of the extension portion 35. Through the seal rings 47, the cooling medium is prevented from being leaked from a communication portion of the cooling medium supply passage 51 and the cooling medium introduction passage 53 to the outside.

The temperature sensor 29 detects the temperature of the rolling roll 5a. In the example of Fig. 4, the temperature sensor 29 is assembled to the rolling roll 5a. In order to transmit a temperature detection signal (voltage signal) from the temperature sensor 29 which is positioned at the rotating side to the control device 31 of the stationary side in a non-contact manner, the rotary transformer 55 is provided as illustrated in Fig. 4. The rotary transformer 55 includes a stator coil 55a which is positioned on the stationary side and a rotor coil 55b which is positioned on the rotating side, and by operation of a magnetic field between the stator coil 55a and the rotor coil 55b, the temperature detection signal (voltage signal) is transmitted from the temperature sensor 29 of the rotating side to the control device 31 of the stationary side.

The control device 31 controls the cooling medium which is supplied to the cooling medium flow channel 37 by the cooling medium supply device 27 based on the temperature detected by the temperature sensor 29 so that the temperature of the rolling roll 5a is less than or equal to a set upper limit temperature (for example, 250°C). The control device 31 may perform the supply control of the cooling medium to the cooling medium flow channel 37 by the cooling medium supply device 27 by controlling an opening of flow controlling valves 57 and 59. The flow controlling valve 57 is provided on the cooling medium supply tube 49, and the flow controlling valve 59 is provided on the air supply tube 41.

For example, the control device 31 may perform the above-described control according to the following control methods A1, A2, or A3.

### (Control Method A1)

If the temperature detected by the temperature sensor 29 reaches the set upper limit temperature, the control device 31 controls the cooling medium supply device 27 so that the cooling medium supply device 27 supplies the cooling medium to the cooling medium flow channel 37. In this case, if the temperature detected by the temperature sensor 29 reaches the set upper limit temperature, the control device 31 opens the flow controlling valves 57 and 59, and the cooling medium supply device 27 may supply the mist-like cooling medium to the cooling medium flow channel 37. Thereby, the temperature of the rolling roll 5a is suppressed so as to be less than or equal to the set upper limit temperature (for example, 250°C). The induction heating coil 25 may perform the induction heating of the rolling roll 5a while the control is performed.

### (Control Method A2)

The control device 31 controls an amount of the mist-like cooling medium which is supplied to the cooling medium flow channel 37 based on the temperature detected by the temperature sensor 29 and a set temperature range (for example, 200°C to 250°C). Thereby, the temperature of the rolling roll 5a is suppressed so as to be less than or equal to the set upper limit temperature (for example, 250°C), and the temperature of the rolling roll 5a is maintained within the set temperature range. In this case, in the example of Fig. 4, the control device 31 controls the amount of the mist-like cooling medium which is supplied to the cooling medium flow channel 37 by controlling the opening of the flow controlling valve 57. Alternatively, the control device 31 may control the amount of the mist-like cooling medium which is supplied to the cooling medium flow channel 37 by controlling not only the opening of the flow controlling valve 57 but also the opening of the flow controlling valve 59. The induction heating coil 25 may perform the induction heating of the rolling roll 5a while the control is performed.

### (Control Method A3)

The control device 31 may control an amount of electric power which is supplied to the induction heating coil 25 from the power supply 34 not only by controlling the amount of the mist-like cooling medium supplied to the cooling medium flow channel 37 but also by controlling a supply electric power controlling portion 32 based on the temperature detected by the temperature sensor 29 and the set temperature range. Thereby, the temperature of the rolling roll 5a is easily maintained within the set temperature range. In the control method A3, the control of the amount of the mist-like cooling medium which is supplied to the cooling medium flow channel 37 is performed by controlling the opening of the flow controlling valve 57 or the openings of the flow controlling valves 57 and 59.

According to the induction heating roll device 20 of the present embodiment, the following effects (1) to (7) are obtained.
(1) Since the induction heating coil 25 provided inside of the rolling roll 5a performs induction heating of the rolling roll 5a, the temperature of the roll 5a is able to be increased up to the set temperature (for example, 200°C) in a short time. For example, in the temperature controller in the related art, the temperature of the rolling roll 5a is able to be increased by only about 40 °C/hr. However, in the present embodiment, the temperature of the rolling roll 5a is able to be increased by about 200 °C/hr.
(2) The resin material is heated by being pressurized. As a result, after the temperature of the rolling roll 5a is increased up to the set temperature, the temperature of the rolling roll 5a tends to exceed the upper limit temperature (for example, 250°C). With respect to this, in the present embodiment, since the cooling medium is supplied to the cooling medium flow channel 37 which is formed inside of the rolling roll 5a by the cooling medium supply device 27, the temperature of the rolling roll 5a is able to be suppressed to be less than or equal to the upper limit temperature. Moreover, in the related art, the induction heating coil is not used in the heating of the rolling roll 5a in the calender. The reason is because it is difficult to control the temperature of the rolling roll 5a within the set temperature range since the cooling function is not provided in the induction heating coil even though the resin material is heated by being rolled to the rolling roll 5a as described above. On the other hand, in the present embodiment, the temperature control of the rolling roll 5a is able to be performed due to the supply of the cooling medium.
(3) If the cooling medium in the state of mist is supplied to inside of the rolling roll 5a, the cooling medium is easily evaporated in the high-temperature rolling roll 5a. Accordingly, since the heat of the rolling roll 5a is able to be converted to heat of vaporization of the cooling medium, the rolling roll 5a is able to be rapidly cooled.
(4) Since the heat of the rolling roll 5a is converted to the heat of vaporization of the cooling medium, the rolling roll 5a is able to be cooled by a small amount of the cooling medium. As a result, the used amount of the cooling medium is able to be suppressed.
(5) Since the induction heating coil 25 is heated without contamination of air and water of a small amount having a low probability of air contamination is able to be used as the cooling medium, the induction heat roll device 20 is able to be used even in a clean room.
(6) The size of the device for heating the rolling roll 5a is able to be decreased compared to the related art as described below. In the related art, in order to heat the rolling rolls, a heating medium such as oil or soft water is heated and supplied to inside of the rolling rolls. In this case, the temperature control of the rolling rolls is performed by controlling the heating through the temperature controller which heats the heating medium. However, the size of the calender is increased when the temperature controller is provided. On the other hand, in the present embodiment, since the temperature controller is not provided and the induction heating coil 25 is provided inside of the rolling roll 5a, the size of the calender is able to be decreased.
(7) In Fig. 4, in the radial direction of the rolling roll 5a, the induction heating coil 25 is positioned on the center axis Ca side of the rolling roll 5a, and the cooling medium flow channel 37 is positioned on the outer circumferential surface side of the rolling roll 5a. Thereby, the outer circumferential surface of the rolling roll 5a is able to be more rapidly cooled.

The present invention is not limited to the above-described embodiment, and it is needless to say that various modifications may be added and obtained without departing from the scope of the invention as claimed. For example, the following modifications 1, 2, and 3 may be arbitrarily combined or adopted singly.

### [Modification 1]

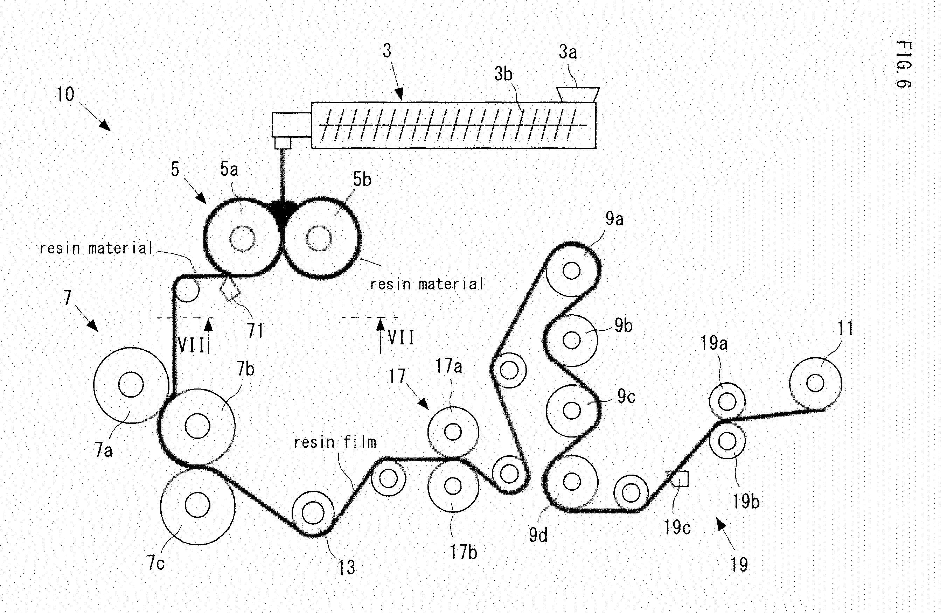

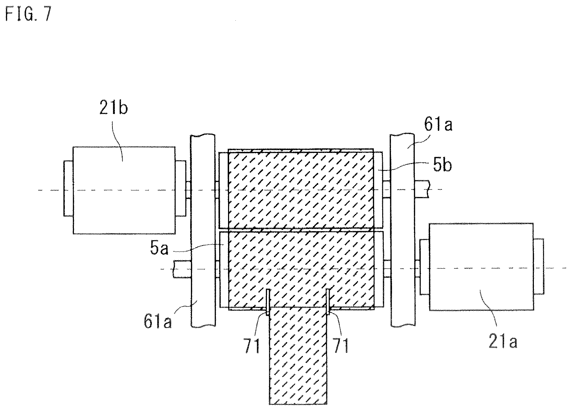

Fig. 6 illustrates a modification of the calender 10. Fig. 7 is a view when viewed from an arrow VII-VII of Fig. 6.

The first roll unit 5 may knead and mix a resin material including a plurality of kinds of resins instead of rolling the resin material. In this case, as illustrated in Fig. 6, the above-described molding portion 15 is omitted, and the first roll unit 5 includes the first and second mixing rolls 5a and 5b which are driven to rotate.

The mixing rolls 5a and 5b are a resin processing body.

The resin material supplied from the extrusion unit 3 is stuck to the outer circumferential surfaces of each of the mixing rolls 5a and 5b. The stuck resin material passes between the mixing rolls 5a and 5b while rotating according to the rotation of the mixing rolls 5a and 5b, is pressurized and kneaded between the mixing rolls 5a and 5b, and is mixed during this process. As illustrated in Fig. 7, the resin material which is stuck to the mixing rolls 5a and 5b is cut from the mixing rolls 5a and 5b by a pair of cutters 71, and the cut resin material is transferred to the second roll unit 7.

Moreover, in the case of Fig. 6, other points are similar to those described above. For example, the other points are similar to those described above as follows.

The above-described configuration 1 may be adopted by the mixing rolls 5a and 5b. That is, the motors 21a and 21b which are driven to rotate the mixing rolls 5a and 5b in the axial direction of the mixing rolls may be directly connected to the mixing rolls 5a and 5b. The motor 21a which is directly connected to the mixing roll 5a and the motor 21b which is directly connected to the mixing roll 5b are positioned on the sides opposite to each other relative to the mixing rolls 5a and 5b in the axial directions of the mixing rolls 5a and 5b.

In this case, the above-described induction heating roll device 20 may be applied to one or both of the mixing rolls 5a and 5b.

### [Modification 2]

In the above description, the cooling medium supply device 27 supplies a cooling medium of liquid other than the mist instead of the mist-like cooling medium to the cooling medium flow channel 37, and therefore, the rolling roll 5a which is subjected to the induction heating by the induction heating coil 25 may be cooled. In this case, in Fig. 4, the air source 27a, the air supply tube 41, the air supply passage 43, the air introduction passage 45, and the flow controlling valve 59 are omitted, and the nozzle portion 27c may be a simple space which communicates with the communication passage 36.

The control device 31 controls the liquid cooling medium which is supplied to the cooling medium flow channel 37 by the cooling medium supply device 27 based on the temperature detected by the temperature sensor 29 so that the temperature of the rolling roll 5a is less than or equal to a set upper limit temperature (for example, 250°C).

For example, the control device 31 may perform the control according to the following control method B1, B2, or B3.

### (Control Method B1)

If the temperature detected by the temperature sensor 29 reaches the set upper limit temperature, the control device 31 controls the cooling medium supply device 27 so that the cooling medium supply device 27 supplies the liquid cooling medium to the cooling medium flow channel 37. In this case, if the temperature detected by the temperature sensor 29 reaches the set upper limit temperature, the control device 31 opens the flow controlling valve 57, and the cooling medium supply device 27 may supply the cooling medium to the cooling medium flow channel 37. Thereby, the temperature of the rolling roll 5a is suppressed so as to be less than or equal to the set upper limit temperature (for example, 250°C). The induction heating coil 25 may perform the induction heating of the rolling roll 5a while the control is performed.

### (Control Method B2)

The control device 31 controls an amount of the liquid cooling medium which is supplied to the cooling medium flow channel 37 based on the temperature detected by the temperature sensor 29 and a set temperature range (for example, 200°C to 250°C). Thereby, the temperature of the rolling roll 5a is suppressed so as to be less than or equal to the set upper limit temperature (for example, 250°C), and the temperature of the rolling roll 5a is maintained within the set temperature range. In this case, the control device 31 controls the amount of the cooling medium which is supplied to the cooling medium flow channel 37 by controlling the opening of the flow controlling valve 57. The induction heating coil 25 may perform the induction heating of the rolling roll 5a while the control is performed.

### (Control Method B3)

The control device 31 may control the amount of the electric power which is supplied to the induction heating coil 25 from the power supply 34 not only by controlling the amount of the liquid cooling medium supplied to the cooling medium flow channel 37 but also by controlling the supply electric power controlling portion 32 based on the temperature detected by the temperature sensor 29 and the set temperature range. Thereby, the temperature of the rolling roll 5a is easily maintained within the set temperature range. In the control method B3, the control of the amount of the cooling medium which is supplied to the cooling medium flow channel 37 is performed by controlling the opening of the flow controlling valve 57.

In the modification 2, other points are the same as those described above.

### [Modification 3]

The rolling rolls 5a and 5b, the rolling rolls 7a and 7b, the rolling rolls 7b and 7c, or the mixing rolls 5a and 5b configure first and second resin processing bodies in which the resin material is rolled or kneaded through the pressurization of the resin material by interposing the resin material between the rolls.

That is, in the example described above, the resin processing body is the rolling rolls 5a and 5b, the rolling rolls 7a, 7b, and 7c, or the mixing rolls 5a and 5b.

According to the present invention, at least one of the first and the second resin processing bodies may be a roll and the other one of the first and the second resin processing bodies may not be a roll. For example, among the rolling rolls 5a and 5b, the rolling roll 5b may be replaced with a resin processing body other than a roll.

In addition, the induction heating roll device of the present invention may be applied to at least one of the first and the second resin processing bodies, and the induction heating roll device of the present invention may be applied or may not be applied to the other one of the first and the second resin processing bodies.

### Description of Reference Numerals

5a, 5b: rolling roll or mixing roll (resin processing body)
7a, 7b, 7c: rolling roll (resin processing body)
20: induction heating roll device, 27: cooling medium supply device
27a: air source, 27b: cooling medium source, 27c: nozzle portion
29: temperature sensor, 31: control device
32: supply electric power controlling portion, 33: rotary transformer
33a: stator coil, 33b: rotor coil
34: power supply, 35: extension portion of rolling roll, 36: communication passage
37: cooling medium flow channel, 39: discharge flow channel
41: air supply tube, 43: air supply passage
44: stationary side member, 45: air introduction passage
47: seal ring, 49: cooling medium supply tube
51: cooling medium supply passage, 53: cooling medium introduction passage, 55: rotary transformer 55a: stator coil, 55b: rotor coil
57: flow controlling valve, 59: flow controlling valve

## Claims

1. An induction heating roll device for performing induction heating of a resin material while pressurizing the resin material, comprising:
first and second resin processing bodies (5a, 5b, 7a, 7b, 7c) adapted to pressurize the resin material by interposing the resin material between the first and second resin processing bodies (5a, 5b, 7a, 7b, 7c), at least one of the first and the second resin processing bodies (5a, 5b, 7a, 7b, 7c) being a roll (5a);
an induction heating coil (25) which is provided inside of the roll (5a); and
a cooling medium supply device (27) adapted to supply a mist-like cooling medium to a cooling medium flow channel (37) which is formed inside of the roll (5a),
wherein the induction heating coil (25) is adapted to perform induction heating of the roll (5a), and the cooling medium supply device (27) is adapted to cool the heated roll by supplying a mist-like cooling medium to the cooling medium flow channel (37), and
in a radial direction of the roll (5a), the induction heating coil (25) is positioned on a center axis (Ca) side of the roll (5a), and the cooling medium flow channel (37) is positioned on an outer circumferential surface side of the roll (5a),
the device further comprising: a discharge flow channel (39) disposed toward the center axis (Ca) side than the cooling medium flow channel (37) and extends in an axial direction of the rolling roll (5a),
wherein the discharge flow channel (39) is configured to discharge the cooling medium supplied to the cooling medium flow channel (37) outside the rolling roll (5a), and the discharge flow channel (39) is formed inside of an extension portion (35) of the rolling roll (5a), and
the cooling medium supply device (27) includes a nozzle portion (27c),
the nozzle portion (27c) is configured to spray a supplied cooling medium, to a communication passage (36) which is formed inside of the extension portion (35), and configured to supply pressurized air, and thereby able to supply the mist-like cooling medium to the cooling medium flow channel (37) through the communication passage (36).

2. The induction heating roll device according to claim 1, further comprising:
a temperature sensor (29) adapted to detect a temperature of the roll (5a); and
a control device (31) adapted to control the cooling medium supply device (27) based on the detected temperature so that the temperature of the roll (5a) is less than or equal to a set upper limit temperature.

## Patentansprüche

1. Walzvorrichtung mit Induktionserwärmung zum Durchführen von Induktionserwärmung eines Kunstharzmaterials bei gleichzeitigem Unterdrucksetzen des Kunstharzmaterials, umfassend:
erste und zweite Kunstharzverarbeitungskörper (5a, 5b, 7a, 7b, 7c), die dazu eingerichtet sind, das Kunstharzmaterial durch Anordnen des Kunstharzmaterials zwischen dem ersten und zweiten Kunstharzverarbeitungskörpern (5a, 5b, 7a, 7b, 7c) unter Druck zu setzen, wobei mindestens einer aus den ersten und zweiten Kunstharzverarbeitungskörpern (5a, 5b, 7a, 7b, 7c) eine Walze (5a) ist;
eine Induktionserwärmungsspule (25), die innerhalb der Walze (5a) angeordnet ist; und
eine Kühlmittelzufuhrvorrichtung (27), die dazu eingerichtet ist, ein nebelartiges Kühlmittel in einen Kühlmittelströmungskanal (37) zu leiten, der innerhalb der Walze (5a) ausgebildet ist,
wobei die Induktionserwärmungsspule (25) dazu eingerichtet ist, Induktionserwärmung der Walze (5a) durchzuführen, und die Kühlmittelzufuhrvorrichtung (27) dazu eingerichtet ist, die erwärmte Walze durch Leiten des nebelartigen Kühlmittels in den Kühlmittelströmungskanal (37) zu kühlen, und
wobei in einer radialen Richtung der Walze (5a) die Induktionserwärmungsspule (25) auf einer Seite der Mittelachse (Ca) der Walze (5a) angeordnet ist, und der Kühlmittelströmungskanal (37) auf einer Seite der Außenumfangsfläche der Walze (5a) angeordnet ist,
wobei die Vorrichtung des Weiteren umfasst: einen Auslassströmungskanal (39), der in Richtung der Seite der Mittelachse (Ca) als der Kühlmittelströmungskanal (37) angeordnet ist und sich in einer axialen Richtung der Walze (5a) erstreckt, und
wobei der Auslassströmungskanal (39) dazu ausgelegt ist, das Kühlmittel, das in den Kühlmittel Strömungskanal (37) geleitet wird, nach außen aus der Walze (5a) auszustoßen, und der Auslassströmungskanal (39) in einem Erweiterungsabschnitt (35) der Walze (5a) ausgebildet ist, und
wobei die Kühlmittelversorgungsvorrichtung (27) einen Düsenabschnitt (27c) beinhaltet,
wobei der Düsenabschnitt (27c) dazu ausgelegt ist, ein zugeführtes Kühlmittel in einen Verbindungskanal (36) zu sprühen, der in dem Erweiterungsabschnitt (35) ausgebildet ist, und dazu ausgelegt ist, Druckluft zuzuführen und dadurch in der Lage zu sein, das nebelartige Kühlmittel durch den Verbindungskanal (36) in den Kühlmittelströmungskanal (37) zu leiten.

2. Walzvorrichtung mit Induktionserwärmung nach Anspruch 1, des Weiteren umfassend:
einen Temperatursensor (29), der dazu eingerichtet ist, eine Temperatur der Walze (5a) zu ermitteln; und
eine Steuervorrichtung (31), die dazu eingerichtet ist, die Kühlmittelversorgungsvorrichtung (27) basierend auf der ermittelten Temperatur zu steuern, so dass die Temperatur der Walze (5a) niedriger oder gleich einer voreingestellten oberen Grenztemperatur ist.

## Revendications

1. Dispositif à cylindre de chauffage à induction pour effectuer un chauffage à induction d'un matériau de résine tout en pressurisant le matériau de résine, comprenant :
des premier et deuxième corps de traitement de résine (5a, 5b, 7a, 7b, 7c) adaptés pour pressuriser le matériau de résine en interposant le matériau de résine entre les premier et deuxièmes corps de traitement de résine (5a, 5b, 7a, 7b, 7c), au moins un des premier et deuxième corps de traitement de résine (5a, 5b, 7a, 7b, 7c) consistant en un cylindre (5a) ;
une bobine de chauffage à induction (25) qui est disposée à l'intérieur du cylindre (5a) ; et
un dispositif d'alimentation en moyen de refroidissement (27) adapté pour alimenter en un moyen de refroidissement de type brouillard un canal d'écoulement de moyen de refroidissement (37) qui est constitué à l'intérieur du cylindre (5a),
dans lequel la bobine de chauffage à induction (25) est adaptée pour réaliser un chauffage à induction du cylindre (5a), et le dispositif d'alimentation en moyen de refroidissement (27) est adapté pour refroidir le cylindre chauffé en alimentant en moyen de refroidissement de type brouillard le canal d'écoulement de moyen de refroidissement (37), et
dans une direction radiale du cylindre (5a), la bobine de chauffage à induction (25) est positionnée sur un côté d'axe central (Ca) du cylindre (5a), et le canal d'écoulement de moyen de refroidissement (37) est positionné sur un côté de surface circonférentielle extérieure du cylindre (5a),
le dispositif comprenant en outre : un canal d'écoulement de décharge (39) disposé vers le côté d'axe central (Ca) autre que le canal d'écoulement de moyen de refroidissement (37) et qui s'étend dans une direction axiale du cylindre roulant (5a),
dans lequel le canal d'écoulement de décharge (39) est configuré pour décharger le moyen de refroidissement fourni au canal d'écoulement de moyen de refroidissement (37) hors du cylindre roulant (5a), et le canal d'écoulement de décharge (39) est constitué à l'intérieur d'une partie d'extension (35) du cylindre roulant (5a), et
le dispositif d'alimentation en moyen de refroidissement (27) inclut une buse (27c),
la partie de buse (27c) est configurée pour pulvériser un moyen de refroidissement fourni, dans un passage de communication (36) qui est constitué à l'intérieur de la partie d'extension (35), et
configuré pour fournir de l'air pressurisé, et ainsi être en mesure d'alimenter en le moyen de refroidissement de type brouillard le canal d'écoulement de moyen de refroidissement (37) via le passage de communication (36).

2. Le dispositif à cylindre de chauffage à induction selon la revendication 1, comprenant en outre :
un capteur de température (29) adapté pour détecter une température du cylindre (5a) ; et
un dispositif de contrôle (31) adapté pour contrôler le dispositif d'alimentation en moyen de refroidissement (27) selon la température détectée de sorte que la température du cylindre (5a) soit inférieure ou égale à une température de limite supérieure fixée.
